# EUROPÄISCHE PATENTSCHRIFT

(11) **EP 0 869 886 B1**
(45) Veröffentlichungstag und Bekanntmachung des Hinweises auf die Patenterteilung: **02.04.2003**
(21) Anmeldenummer: 97918901.6
(22) Anmeldetag: 23.08.1997
(51) Int. Cl.: B60S 1/38, B60S 1/40

(54) **WISCHBLATT FÜR SCHEIBEN VON KRAFTFAHRZEUGEN**
WIPER BLADE FOR VEHICLE WINDOW PANES
BALAI D'ESSUIE-GLACE POUR VITRES DE VEHICULE

(30) Priorität: 02.11.1996 DE 19645170
(43) Veröffentlichungstag der Anmeldung: 14.10.1998
(73) Patentinhaber: ROBERT BOSCH GMBH, 70442 Stuttgart (DE)
(72) Erfinder: MERKEL, Wilfried, D-77876 Kappelrodeck (DE); KOTLARSKI, Thomas, D-77830 Bühlertal (DE); REISS, Jürgen, D-77815 Bühl (DE)
(86) Internationale Anmeldenummer: DE9701839
(87) Internationale Veröffentlichungsnummer: WO98019899

(56) Entgegenhaltungen:
- EP-A- 0 594 451
- WO-A-88/05004
- DE-A- 2 352 777
- DE-B- 1 247 161

## Beschreibung

### Stand der Technik

Bei Wischblättern der im Oberbegriff des Anspruchs 1 bezeichneten Art soll das Tragelement über das gesamte vom Wischblatt bestrichene Wischfeld eine möglichst gleichmäßige Verteilung des vom Wischerarm ausgehenden Wischblatt-Anpreßdrücks an der Scheibe gewährleisten. Durch eine entsprechende Krümmung des unbelasteten Tragelements - also wenn das Wischblatt nicht an der Scheibe anliegt - werden die Enden der im Betrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muß also etwas stärker sein als die im Wischfeld an der zu wischenden Scheibe gemessene stärkste Krümmung. Das Tragelement ersetzt somit die aufwendige Tragbügelkonstruktion mit zwei in der Wischleiste angeordneten Federschienen, wie sie bei herkömmlichen Wischblättern praktiziert wird.

Die Erfindung geht aus von einem Wischblatt nach der Gattung des Anspruchs 1. Bei einem bekannten Wischblatt dieser Art (DE-A-26 14 457) sind die Anschlagflächen an einstückig mit dem Tragelement verbundenen Ansätzen angeordnet, die zu der Vorrichtung zum Anschließen des Wischblatts an dem angetriebenen Wischerarm gehören. Diese Ansätze bestehen somit aus demselben Material wie das Tragelement. Dies mag möglicherweise solange von untergeordneter Bedeutung sein, als das Tragelement aus einem Kunststoff hergestellt und dieses deshalb samt den Ansätzen durch Füllen einer entsprechenden Form gefertigt wird. Wenn das Tragelement jedoch aus Metall hergestellt werden soll, stehen sich zwei Forderungen diametral gegenüber. Es soll nämlich einmal das Tragelement gute Federeigenschaften aufweisen, andererseits sollen jedoch die Ansätze problemlos aus der Ebene des Tragelements um etwa 90 Grad herausgebogen und in dieser Position fixiert werden, damit die im Betrieb auftretenden Belastungen zwischen Wischblatt und Wischerarm an den Anschlagflächen aufgenommen werden können. Diese beiden Forderungen können praktisch kaum erfüllt werden, ohne daß man, hinsichtlich der Materialwahl, nachteilige Kompromisse eingehen muß.

Bei einem anderen bekannten Wischblatt (DE-A-12 47 161) ist das Tragelement mit einer als separates Bauteil ausgebildeten Anschlußvorrichtung versehen. Diese Anschlußvorrichtung ist mit Hilfe von Nieten mit dem Tragelement fest verbunden. Die dazu erforderlichen Bohrungen im Tragelement, in denen die Nieten mechanisch verspannt sitzen, führen jedoch zu einer unerwünschten, weil unkontrollierbaren Veränderung der Tragelement-Spannung, so daß kein befriedigendes Wischergebnis zu erreichen ist.

### Vorteile der Erfindung

Bei dem gemäß dem Kennzeichen des Anspruchs 1 ausgebildeten Wischblatt dagegen kann sowohl für das Tragelement als auch für die Anschlußvorrichtung eine den Forderungen an das jeweilige Bauteil gerechtwerdende Materialwahl getroffen werden. Die Verbindung der beiden Bauteile aneinander erfolgt preisgünstig durch einfaches Aufrasten des einen Bauteils an das andere Bauteil, wobei die Rastmittel des einen Bauteils mit den Gegenrastmitteln des anderen Bauteils in Eingriff gelangen, so daß eine ordnungsgemäße Arretierung erfolgt.

Aus fertigungstechnischen Gründen kann es vorteilhaft sein, die Rastmittel an der Anschlußvorrichtung anzuordnen.

Wenn gemäß einer Weiterbildung der Erfindung die Rastmittel zumindest eine Rastschulter aufweisen, die in einer wenigstens annähernd zur Scheibenoberfläche parallelen Ebene liegt und dieser Rastschulter eine Gegenrastschulter des Tragelements zugeordnet ist, wirken die bei der Arbeitsbewegung des Wischblatts auftretenden Kräfte nicht in Richtung der Rastkräfte, so daß eine dauerhafte und zuverlässige Verbindung zwischen dem Tragelement und der Anschlußvorrichtung sichergestellt ist.

Eine präzise Anordnung der Anschlußvorrichtung am Tragelement in dessen Längsrichtung gesehen wird erreicht, wenn die Rastmittel zumindest eine Halteschulter aufweisen, die quer zur Längserstreckung des Tragelements angeordnet ist und weiter dieser Halteschulter eine Gegenhalteschulter des Tragelements zugeordnet ist.

In vorteilhafter Weise ist die Rastschulter bzw. die Halteschulter am freien Ende einer an der Anschlußvorrichtung angeordneten, zum Tragelement federbelasteten Zunge angeordnet.

Ohne besonderen konstruktiven Aufwand lassen sich diese Rastungen realiseren, wenn die der Rastschulter bzw. der Halteschulter zugeordnete Gegenrastschulter bzw. Gegenhalteschulter durch eine am Tragelement vorhandene Aussparung gebildet ist.

Dabei wird eine weitere Vereinfachung des Wischblattaufbaus dadurch erreicht, daß die Anschlußvorrichtung aus einem elastischen Kunststoff gefertigt ist und die Zunge einstückig mit der Anschlußvorrichtung verbunden ist.

Wenn die Anschlußvorrichtung zwei mit Abstand voneinander befindliche, quer zur Antriebsrichtung verlaufende, zueinander parallel und in auf der Scheibe stehenden Ebenen ausgerichtete Wangen aufweist, sind die Rastmittel zweckmäßig mit den Wangen der Anschlußvorrichtung verbunden.

Eine betriebssichere Ausgestaltung der Anschlußvorrichtung ergibt sich dadurch, daß die Anschlußvorrichtung quer zur Längserstreckung des Wischblatts gesehen einen im wesentlichen U-förmigen Querschnitt hat, deren U-Basis am Tragelement anliegt und deren beiden U-Schenkel die Wangen bilden.

Wenn die Wangen jeweils sich über die U-Basis hinaus erstreckende, leistenartige Verlängerungen aufweisen, deren in Arbeitsrichtung des Wischblatts gemessener Abstand voneinander auf die in Montageposition vorhandene, in Arbeitsrichtung gemessene Breite des Tragelements abgestimmt ist, ist die Anschlußvorrichtung präzise am Tragelement geführt und die während des Betriebs des Wischblatts auf die beiden miteinander verbundenen Bauteile einwirkenden Kräfte werden sicher übertragen, ohne daß die Rastverbindung dadurch beeinträchtigt wird.

Die Befestigungsrastung läßt sich besonders einfach dadurch bewerkstelligen, daß an zumindest einem der beiden U-Schenkel der Anschlußvorrichtung wenigstens eine aus der Schenkelebene auslenkbare Zunge ausgebildet ist, die sich bis in den Bereich der leistenartigen Verlängerungen der U-Schenkel erstreckt, wobei an dem dort befindlichen freien Ende der Zunge ein Rasthaken mit der der U-Basis zugewandten Rastschulter angeordnet ist und der Abstand zwischen der Rastschulter und der U-Basis auf die Dicke des Tragelements abgestimmt ist. Auf diese Weise wird die von der Anschlußvorrichtung abgewandte Unterseite des Tragelements als Gegenrastschulter benutzt. Weitere diesbezügliche Ausgestaltungen können entfallen.

In besonders gelagerten Fällen kann es bei einer eine an der Oberseite des Tragelements anlegbare Grundplatte aufweisende Anschlußvorrichtung von Vorteil sein, die Rastmittel an dieser Grundplatte anzuordnen. Dabei können die Rastmittel am freien Ende einer mit der Grundplatte verbundenen, zum Tragelement federbelasteten Zunge angeordnet und durch einen zum Tragelement weisenden Vorsprung gebildet sein, der die Halteschulter aufweist.

In diesem Fall ergibt sich eine kostengünstige Rastverbindung, wenn die der Halteschulter zugewandte Gegenhalteschulter durch eine Aussparung am Tragelement gebildet ist.

Eine sehr gute Führung der Anschlußvorrichtung am Tragelement kann gemäß einer weiteren Ausgestaltung der Erfindung dadurch erreicht werden, daß die Anschlußvorrichtung auf ihrer der Scheibe zugewandten Seite ihrer Grundplatte mindestens zwei sich in Richtung der Tragelementlängsachse erstreckende, im Querschnitt L-förmige Führungsleisten hat, deren von der Grundplatte abgewandten einen L-Schenkel krallenartig gegeneinander gerichtet sind, wobei der Abstand zwischen den anderen L-Schenkeln auf die Breite des Tragelements und der Abstand zwischen den einen L-Schenkeln und der Grundplatte auf die Dicke des Tragelements abgestimmt sind.

Weitere, vorteilhafte Weiterbildungen und Ausgestaltungen der Erfindung sind in der nachfolgenden Beschreibung und in der dazugehörigen Zeichnung dargestellten Ausführungsbeispiels angegeben.

### Zeichnung

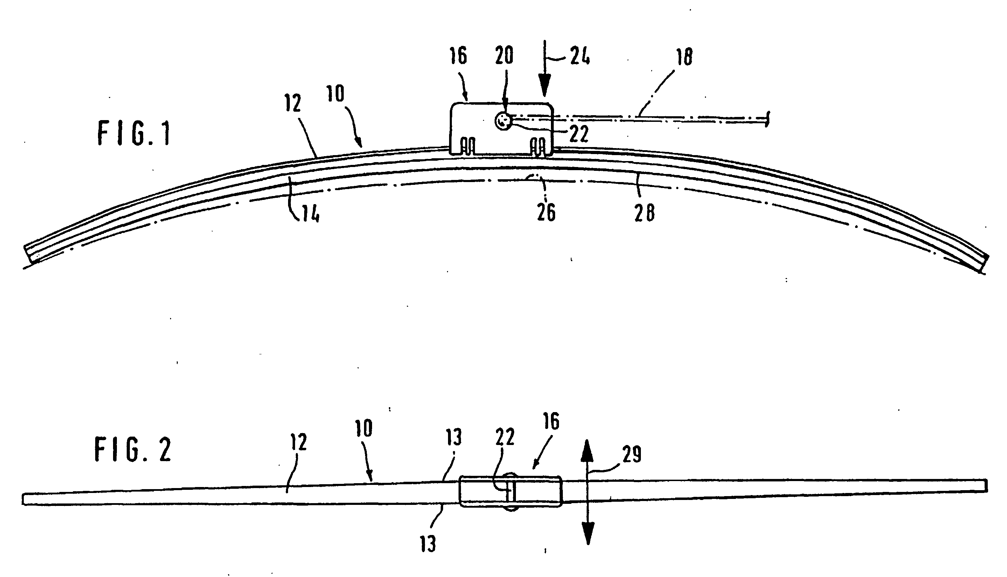

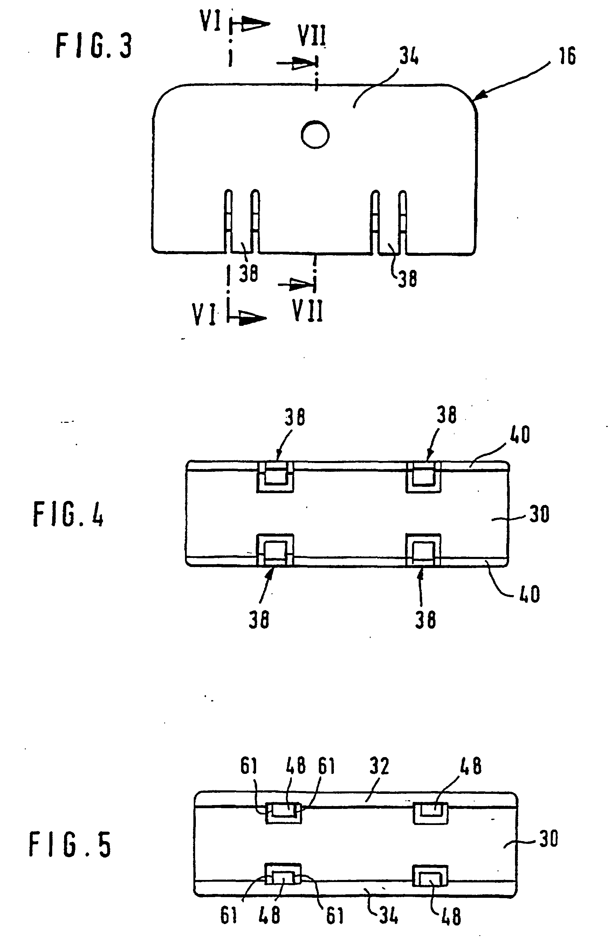

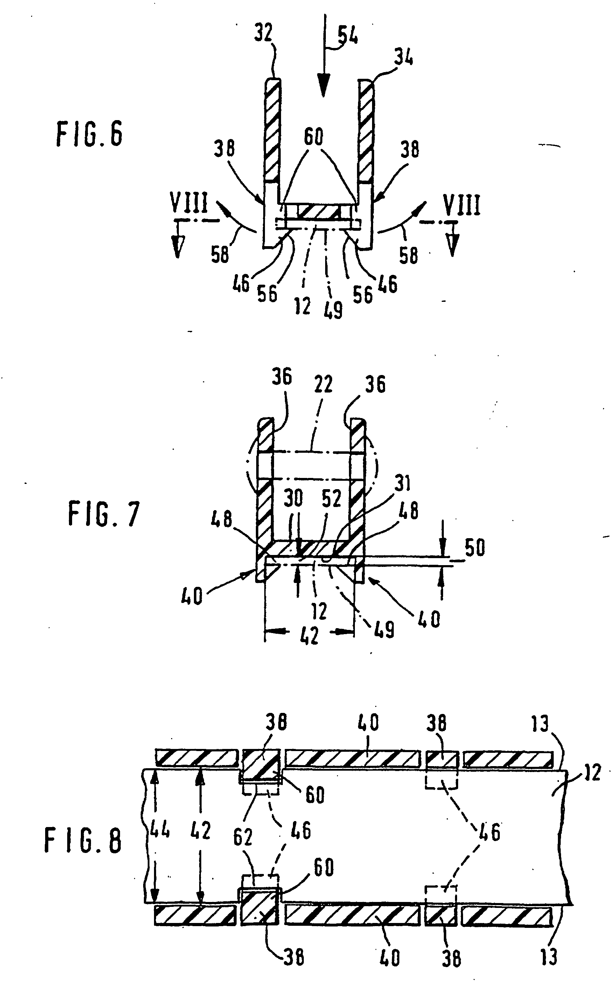

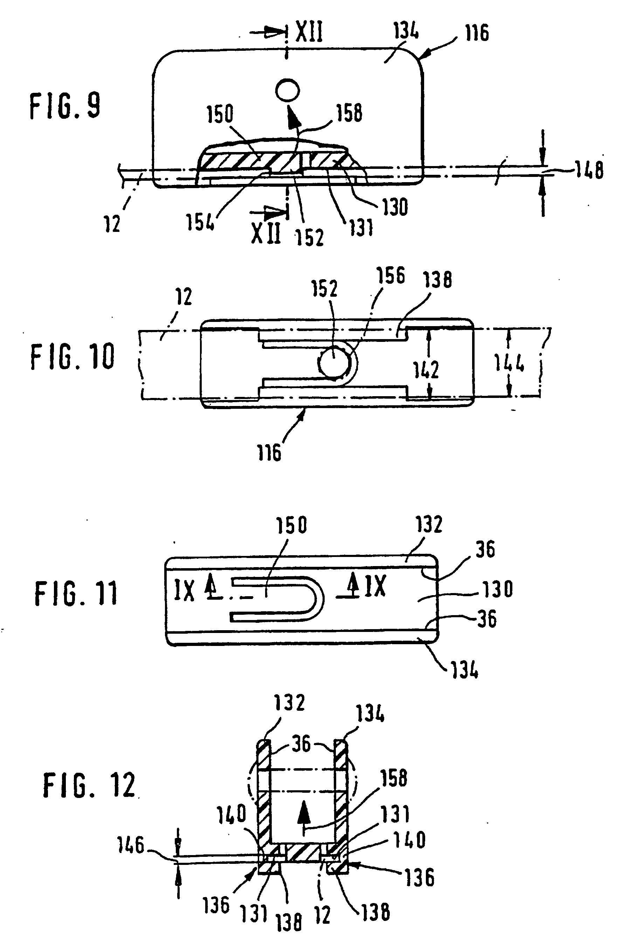

In der Zeichnung zeigen: Figur 1 eine Seitenansicht eines erfindungsgemäßen Wischblatts, Figur 2 eine Draufsicht auf das Wischblatt gemäß Figur 1, Figur 3 eine Seitenansicht einer zum Wischblatt gehörenden Anschlußvorrichtung für einen angetriebenen Wischerarm, Figur 4 eine Ansicht von unten auf die Anschlußvorrichtung gemäß Figur 3, Figur 5 eine Draufsicht auf die Anschlußvorrichtung gemäß Figur 3, Figur 6 einen Schnitt durch die Anschlußvorrichtung entlang der Linie VI-VI in Figur 3, Figur 7 einen Schnitt durch die Anschlußvorrichtung gemäß der Linie VII-VII in Figur 3, Figur 8 einen Schnitt gemäß der Linie VIII-VIII in Figur 6 durch die Anschlußvorrichtung, mit eingezeichnetem Mittelstück des Tragelements, in vergrößerter Darstellung, Figur 9 eine Seitenansicht einer anders ausgebildeten Anschlußvorrichtung, die entlang einer in Figur 11 mit IX-IX bezeichneten Linie teilweise geschnitten ist, Figur 10 eine Ansicht von unten auf die Anschlußvorrichtung gemäß Figur 9, Figur 11 eine Draufsicht auf die Anschlußvorrichtung gemäß Figur 9 und Figur 12 einen Schnitt durch die Anschlußvorrichtung gemäß Figur 9 entlang der Linie XII-XII.

### Beschreibung des Ausführungsbeispiels

Ein in den Figuren 1 und 2 dargestelltes Wischblatt 10 weist ein langgestrecktes federelastisches Tragelement 12 auf, an dessen Unterseite eine gummielastische Wischleiste 14 befestigt ist. An der Oberseite des Tragelements 12 ist eine Anschlußvorrichtung 16 angeordnet, mit deren Hilfe das Wischblatt 10 mit einem angetriebenen Wischerarm 18 lösbar verbunden werden kann. An dem freien Ende 20 des Wischerarms 18 ist ein als Gegenanschlußmittel dienender Haken angeformt, welcher einen zur Anschlüßvorrichtung 16 des Wischblatts gehörenden Gelenkbolzen 22 umgreift. Die Sicherung zwischen dem Wischerarm 18 und dem Wischblatt 10 wird durch nicht näher dargestellte, an sich bekannte, als Adapter ausgebildetes Sicherungsmittel übernommen. Der Wischerarm 18 und damit auch der Haken am Ende 20 ist in Richtung des Pfeiles 24 (Figur 1) zur zu wischenden Scheibe belastet, deren zu wischende Oberfläche in Figur 1 durch eine strichpunktierte Linie 26 angedeutet ist. Da die strichpunktierte Linie 26 die stärkste Krümmung der Scheibenoberfläche darstellen soll ist klar ersichtlich, daß die Krümmung des mit seinen beiden Enden an der Scheibe anliegenden Wischblatts stärker ist als die maximale Scheibenkrümmung. Unter dem Anpreßdruck (Pfeil 24) legt sich das Wischblatt 10 mit seiner Wischlippe 28 über seine gesamte Länge an der Scheibenoberfläche 26 an. Dabei baut sich im federelastischen Tragelement 12 eine Spannung auf, welche für eine ordnungsgemäße Anlage der Wischleiste 14 bzw. deren Wischlippe 28 über deren gesamte Länge an der Scheibe sorgt, wodurch die Wischlippe 18 bei in Richtung des Doppelpfeils 29 (Figur 2) bewegtem Wischblatt stets an der Scheibenoberfläche 26 angelegt bleibt.

Im folgenden sollen die Verbindungsmittel zum Befestigen der Anschlußvorrichtung 16 am Tragelement 12 zunächst anhand der Figuren 3 bis 8 erläutert werden.

Die an der von der Scheibenoberfläche 26 abgewandten Oberseite des Tragelements 12 angeordnete Anschlußvorrichtung 16 hat einen im wesentlichen U-förmigen Querschnitt. Sie hat somit eine U-Basis 30 und zwei mit Abstand voneinander angeordnete, auf der U-Basis 30 stehend ausgerichtete U-Schenkel 32, 34, zwischen denen, bei in Betrieb befindlichem Wischblatt der Wischerarm 18 angeordnet ist. Dieser umgreift mit seinem hakenförmig ausgebildeten freien Ende 20 den Gelenkbolzen 22 (Figur 7). Der Wischerarm 18 greift passend zwischen die U-Schenkel 32, 34, so daß er mit seinen Gegenschläge bildende Seitenflächen an den einander zugewandten Wangen 36 der U-Schenkel 30, 32 anliegt. Auf diese Weise wird die Antriebsbewegung des Wischerarms 18 ordnungsgemäß auf das Wischblatt 10 übertragen. Die Anschlußvorrichtung 16 ist aus einem elastischen Kunststoff gefertigt. Wie insbesondere die Figuren 3 bis 5 zeigen, sind an den U-Schenkeln 32 und 34 jeweils zwei paarweise einander gegenüberliegend angeordnete, auslenkbare Zungen 38 ausgespart, die an ihrem einen Ende einstückig mit dem U-Schenkeln 32 bzw. 34 verbunden sind. An der von den U-Schenkeln 32, 34 abgewandten Seite der U-Basis 30 setzen sich die U-Schenkel 32, 34 mit leistenartigen Verlängerungen 40 fort. Diese leistenartigen Verlängerungen 40 befinden sich in einem Abstand 42 voneinander, der auf die Breite 44 des Tragelements 12 abgestimmt ist (Figur 8). Dadurch ergibt sich eine einwandfreie seitliche Führung für die Anschlußvorrichtung 16 am Tragelement 12, wenn diese entsprechend den Figuren 1 und 2 auf dieses aufgesetzt wird. Die freigestellten Zungen 38 erstrecken sich von den U-Schenkeln 32, 34 aus bis in den Bereich der leistenartigen Verlängerungen 40 (Figur 6). An ihren freien Enden ist jeweils ein Rastzahn 46 angeordnet, der sich jeweils von der Zunge 38 aus zur anderen, zum selben Zungenpaar gehörenden Zunge erstreckt. Jeder Rastzahn hat eine der Unterseite der U-Basis 30 der Anschlußvorrichtung 16 zugewandte Rastschulter 48, die im wesentlichen in einer zur zu wischenden Scheibe parallelen Ebene liegt (Figur 7). Der Abstand 50 zwischen der Rastschulter 48 und der dieser zugewandten Unterseite 31 der U-Basis 30 ist auf die Dicke 52 des Tragelements 12 abgestimmt (Figur 7).

Wenn die Anschlußvorrichtung 16 in Richtung des Pfeiles 54 in Figur 6 auf das Tragelement 12 aufgesetzt wird, drücken die Seitenkanten 13 des Tragelements 12 (Figur 2) gegen Anlaufschrägen 56 der Rastzähne 46, so daß diese in Richtung der Pfeile 58 (Figur 6) vorübergehend auslenken, bis das Tragelement 12 seine in den Figuren 6 und 7 strichpunktiert dargestellte Montageposition erreicht hat. Da die Anschlußvorrichtung 16 und damit auch die Zungen 38 aus einem elastischen Kunststoff hergestellt ist, federn danach die Zungen 38 wieder in ihre Ausgangsposition entgegen den Pfeilen 58 zurück, wobei die Rastschultern 48 der Rastzähne 46 das bandförmige Tragelement 12 untergreifen und dieses an der Anschlußvorrichtung 16 so sichern, daß eine Trennung dieser beiden Teile voneinander entgegen der Richtung des Pfeiles 54 nicht mehr möglich ist. Die Zungen 38 bilden somit zusammen mit ihren Rastzähnen 46 und den an diesen angeordneten Rastschultern 48 Rastmittel, und die Unterseite 49 des Tragelements 12 bildet ein mit den Rastmitteln zusammenwirkendes Gegenrastmittel, so daß eine zuverlässige Befestigungsrastung der beiden Teile aneinander erreicht ist. Um auch eine zuverlässige Arretierung der Anschlußvorrichtung 16 am Tragelement 12 in dessen Längsrichtung zu gewährleisten, sind beim Ausführungsbeispiel zwei Zungen 38 mit nach innen, also gegeneinander gerichteten Verdickungen 60 versehen (Figur 6 und 8), denen am Tragelement 12 angeordnete, randoffene Aussparungen 62 zugeordnet sind. Die Verdickungen 60 der Zungen 38 gelangen bei ordnungsgemäßer Ausrichtung der Anschlußvorrichtung 16 am Tragelement 12 in die Aussparungen 62 (Figur 8), wenn die Zungen 38 wieder in ihre in Figur 6 dargestellte Ausgangsposition zurückfedern. Die Aussparungen 62 bilden also zusammen mit den Verdickungen 60 eine Arretierungsrastung, wobei die in Längsrichtung des Tragelements 12 weisenden Flächen 61 der Verdickungen 60 Halteschultern bilden. Die diesen Halteschultern zugewandten Kanten der Aussparungen 62 bilden die Gegenhalteschultern dieser Arretierungsrastung.

Eine andere Ausführungsform der Erfindung soll nun anhand der Figuren 9 bis 12 erläutert werden. Die in Figur 9 in Seitenansicht gezeigte Anschlußvorrichtung ist mit der Bezugszahl 116 versehen worden. Sie weist ebenfalls einen U-förmigen Querschnitt auf und ist aus dem federelastischen Material vorzugsweise aus einem Kunststoff hergestellt. Sie hat also ebenfalls eine U-Basis 130 und somit auch zwei U-Schenkel 132 und 134, deren gegeneinander gerichtete Seitenflächen die Wangen 36 bilden. Auch bei dieser Ausführungsform sind die U-Schenkel 132, 134 über die als Grundplatte dienende U-Basis 130 hinausgeführt. Diese Verlängerungen sind als im Querschnitt L-förmige Leisten 136 ausgebildet. Die einen L-Schenkel 138 der Leisten 136 sind gegeneinander gerichtet und über die anderen L-Schenkel 140 einstückig mit dem U-förmigen Körper der Anschlußvorrichtung 116 verbunden. Die Ausgestaltung der L-förmigen Leisten 136 ist dabei so getroffen, daß der Abstand 142 zwischen den L-Schenkeln 140 auf die Breite 144 des Tragselements 12 abgestimmt ist (Figur 10). Der Abstand 146 zwischen dem einen L-Schenkel 138 und dem dieser zugewandten Unterseite 131 der U-Basis 130 ist auf die Dicke 148 des bandförmigen Tragelements 12 abgestimmt (Figuren 9 und 12). Wie die Figuren 9, 10 und 12 zeigen ergibt sich somit eine schlittenartige Führung für die Anschlußvorrichtung 116 auf dem Tragelement 12. Die Anschlußvorrichtung 116 kann also in Längsrichtung des Tragelements auf dieses aufgeschoben werden, wobei die L-förmigen Leisten 136 zusammen mit der als Grundplatte dienenden U-Basis 130 der Anschlußvorrichtung 116 eine allseitige Führung gegenüber dem Tragelement 12 bilden.

Um die Anschlußvorrichtung 16 in Längsrichtung des Tragelements 12 an diesem zu arretieren, ist die Anschlußvorrichtung 116 in ihrer U-Basis 130 mit einer elastisch auslenkbaren, mit der Anschlußvorrichtung 116 einstückig verbundenen, freigestellten Zunge 150 versehen, an deren freiem Ende ein aus der U-Basis heraus zum Tragelement 12 vorspringender Zapfen 152 angeordnet ist. Die Mantelfläche 154 des Zapfens 152 bildet eine Halteschulter, der eine Gegenhalteschulter am Tragelement 12 zugeordnet ist. Diese Gegenhalteschulter ist beim Ausführungsbeispiel durch die Wandfläche einer Bohrung 156 im Tragelement 12 gebildet (Figur 10). Dabei ist die Anordnung zwischen dem Zapfen 152 und der Bohrung 156 so getroffen, daß sich die Anschlußvorrichtung 116 in ihrer ordnungsgemäßen Montageposition befindet, wenn der Zapfen 152 in der Bohrung 156 sitzt. Die Montage der Anschlußvorrichtung 116 am Tragelement 12 wird im folgenden anhand der Figur 9 und 10 erläutert. Die Anschlußvorrichtung 116 wird in Längsrichtung des Tragelements 12 auf dieses aufgeschoben. Dabei liegt das Tragelement 12 in der schlittenartigen Führung, welche durch L-förmigen Leisten 136 gebildet ist. Beim Durchschieben des Tragelements 12 durch die Schlittenführung der Anschlußvorrichtung 116, wird die Zunge 150 in Richtung des Pfeiles 158 soweit ausgelenkt, daß der Zapfen 152 die Schlittenführung freigibt. Nach Erreichen der ordnungsgemäßen Montageposition federt die nun vorgespannte Zunge 150 mit dem Zapfen 152 in ihre in Figur 9 gezeigte Ausgangsposition zurück, wobei der Zapfen 152 in die ihm zugeordneten Bohrung 156 gelangt. Die Mantelfläche 154 des Zapfens 152 arbeitet nun mit der Mantelfläche der Bohrung 156 im Sinne von Halteschultern und Gegenhalteschultern zusammen.

Anhand der vorstehenden Beschreibung ist nun klar erläutert, daß eines der beiden miteinander verbundenen Bauteile 12 bzw. 16 mit elastisch auslenkbaren Rastmitteln 38, 46 bzw. 150, 152 versehen ist, welche mit Gegenrastmitteln 12 des anderen Bauteils 16 bzw. 12 im Sinne der Befestigung der beiden Bauteile 12 und 16 aneinander zusammenarbeiten.

Das Tragelement 12 ist bei den Ausführungsbeispielen zwar einteilig ausgebildet, doch kann dieses durchaus aus mehreren Teilen bestehen, ohne daß deshalb der Rahmen der vorliegenden Erfindung verlassen wird.

## Patentansprüche

1. Wischblatt (10) für Scheiben von Kraftfahrzeugen, mit einer an der zu wischenden Scheibe anlegbaren, langgestreckten, gummielastischen Wischleiste (14), die im wesentlichen längsachsenparallel an einem langgestreckten, federelastischen Tragelement (12) als erstes Bauteil gehalten ist, an dessen Mittelabschnitt als weiteres Bauteil eine Anschlußvorrichtung (16) für zur Scheibe belastete Gegenanschlußmittel (20) eines angetriebenen Wischerarms (18) angeordnet ist, wobei die Anschlußvorrichtung (16) zwei mit Abstand voneinander befindliche, quer zur Antriebsrichtung verlaufende, zueinander parallel und in auf der Scheibe stehenden Ebenen ausgerichtete Anschlagflächen (36) hat, die mit Gegenanschlägen des Wischerarms (18) zusammenarbeiten, **dadurch gekennzeichnet, daß** eines der beiden miteinander verbundenen Bauteile (12 bzw. 16) mit elastisch auslenkbaren Rastmitteln versehen ist, welche mit Gegenrastmitteln des anderen Bauteils (16 bzw. 12) im Sinne einer Arretierung der beiden Bauteile (12 und 16) aneinander zusammenarbeiten.

2. Wischblatt nach Anspruch 1, **dadurch gekennzeichnet, daß** die Rastmittel an der Anschlußvorrichtung (16) angeordnet sind.

3. Wischblatt nach Anspruch 2, **dadurch gekennzeichnet, daß** die Rastmittel zumindest eine Rastschulter (48) aufweisen, die mit in wenigstens annähernd zur Scheibenoberfläche (26) parallelen Ebene liegt und daß dieser Rastschulter eine Gegenrastschulter des Tragelements (12) zugeordnet ist.

4. Wischblatt nach einem der Ansprüche 2 oder 3, **dadurch gekennzeichnet, daß** die Rastmittel zumindest eine Halteschulter aufweisen, die quer zur Längerstreckung des Tragelements angeordnet ist und daß dieser Halteschulter eine Gegenhalteschulter des Tragelements zugeordnet ist.

5. Wischblatt nach einem der Ansprüche 3 oder 4, **dadurch gekennzeichnet, daß** die Rastschulter bzw. die Halteschulter am freien Ende einer an der Anschlußvorrichtung (16) angeordneten, zum Tragelement (12) federbelasteten Zunge angeordnet ist.

6. Wischblatt nach einem der Ansprüche 4 oder 5, **dadurch gekennzeichnet, daß** die der Rastschulter bzw. der Halteschulter zugeordnete Gegenrastschulter bzw. Gegenhalteschulter durch eine am Tragelement vorhandene Aussparung gebildet ist.

7. Wischblatt nach einem der Ansprüche 5 oder 6, **dadurch gekennzeichnet, daß** die Anschlußvorrichtung (16) aus einem elastischen Kunststoff gefertigt ist und daß die Zunge (38) einstückig mit der Anschlußvorrichtung (16) verbunden ist.

8. Wischblatt nach einem der Ansprüche 1 bis 7, **dadurch gekennzeichnet, daß** die Anschlußvorrichtung (16) zwei mit Abstand voneinander befindliche, quer zur Antriebsrichtung verlaufende, zueinander parallel und in auf der Scheibe stehenden Ebenen ausgerichteter Wangen aufweist, mit denen Rastmittel der Anschlußvorrichtung (16) verbunden sind.

9. Wischblatt nach Anspruch 8, **dadurch gekennzeichnet, daß** die Anschlußvorrichtung (16), quer zur Längserstreckung des Wischblatts (10) gesehen, einen im wesentlichen U-förmigen Querschnitt hat, deren U-Basis (30) am Tragelement (12) anliegt und deren beiden U-Schenkel (32, 34) die Wangen bilden.

10. Wischblatt nach einem der Ansprüche 8 oder 9, **dadurch gekennzeichnet, daß** die Wangen (32, 34) jeweils sich über die U-Basis (30) hinaus erstreckende leistenartige Verlängerungen (40) aufweisen, deren in Arbeitsrichtung (Doppelpfeil 29) des Wischblatts (10) gemessener Abstand (42) voneinander auf die in Montageposition vorhandene, in Arbeitsrichtung gemessene Breite (44) des Tragelements (12) abgestimmt ist.

11. Wischblatt nach einem der Ansprüche 7 bis 10, **dadurch gekennzeichnet, daß** an zumindest einem der beiden U-Schenkel (32, 34) der Anschlußvorrichtung (16) wenigstens eine aus der Schenkelebene auslenkbare Zunge (38) ausgebildet ist, die sich bis in den Bereich der leistenartigen Verlängerungen (40) der U-Schenkel erstreckt, daß an dem dort befindlichen freien Ende der Zunge ein Rasthaken mit der der U-Basis zugewandten Rastschulter (48) angeordnet ist und daß der Abstand zwischen der Rastschulter und der U-Basis auf die Dicke des Tragelements abgestimmt ist.

12. Wischblatt nach einem der Ansprüche 1 bis 7, **dadurch gekennzeichnet, daß** die Anschlußvorrichtung (16) eine an der Oberseite des Tragelements (12) anlegbare Grundplatte (30) hat, an welcher Rastmittel (150, 152) der Anschlußvorrichtung (16) angeordnet sind.

13. Wischblatt nach Anspruch 12, **dadurch gekennzeichnet, daß** die Rastmittel (152) am freien einer mit der Grundplatte (30) verbundenen, zum Tragelement (12) federbelasteten Zunge (150) angeordnet und durch einen zum Tragelement weisenden Vorsprung (152) gebildet sind, welche die Halteschulter (154) aufweist.

14. Wischblatt nach Anspruch 13, **dadurch gekennzeichnet, daß** die der Halteschulter (154) zugewandte Gegenhalteschulter durch eine Aussparung (156) am Tragelement (12) gebildet ist.

15. Wischblatt nach einem der Ansprüche 12 bis 14, **dadurch gekennzeichnet, daß** die Anschlußvorrichtung (16) auf ihrer Scheibe zugewandten Seite ihrer Grundplatte (30) mindestens zwei sich in Richtung der Tragelementlängsachse erstrekkende, im Querschnitt L-förmige Führungsleisten (136) hat, deren von der Grundplatte (30) abgewandte einen L-Schenkel (138) krallenartig gegeneinander gerichtet sind, wobei der Abstand zwischen den anderen L-Schenkeln (140) auf die Breite (144) des Tragelements (12) und der Abstand (146) zwischen den einen L-Schenkeln (138) und der Grundplatte (30) auf die Dicke (148) des Tragelements (12) abgestimmt sind.

## Claims

1. Wiper blade (10) for windows of motor vehicles, having an elongate, rubber-elastic wiper strip (14) which can be placed against the window to be wiped and is held essentially parallel to the longitudinal axis on an elongate, resilient supporting element (12) as first component, on whose central section a connecting device (16) for mating connecting means (20), which are loaded towards the window, of a driven wiper arm (18) is arranged as a further component, the connecting device (16) having two stop surfaces (36) which are situated at a distance from each other, run transversely to the driving direction, and are orientated parallel to each other and in planes perpendicular to the window and which interact with mating stops of the wiper arm (18), **characterized in that** one of the two interconnected components (12 or 16) is provided with elastically deflectable latching means which interact with mating latching means of the other component (16 or 12) with the effect of locking the two components (12 and 16) to each other.

2. Wiper blade according to Claim 1, **characterized in that** the latching means are arranged on the connecting device (16).

3. Wiper blade according to Claim 2, **characterized in that** the latching means have at least one latching shoulder (48) which lies in a plane at least approximately parallel to the window surface (26), and **in that** this latching shoulder is assigned a mating latching shoulder of the supporting element (12).

4. Wiper blade according to either of Claims 2 and 3, **characterized in that** the latching means have at least one retaining shoulder which is arranged transversely to the longitudinal extent of the supporting element, and **in that** this retaining shoulder is assigned a mating retaining shoulder of the supporting element.

5. Wiper blade according to either of Claims 3 and 4, **characterized in that** the latching shoulder or the retaining shoulder is arranged at the free end of a tongue which is arranged on the connecting device (16) and is spring-loaded towards the supporting element (12).

6. Wiper blade according to either of Claims 4 and 5, **characterized in that** the mating latching shoulder or mating retaining shoulder assigned to the latching shoulder or the retaining shoulder, respectively, is formed by a cutout present along the supporting element.

7. Wiper blade according to either of Claims 5 and 6, **characterized in that** the connecting device (16) is manufactured from a flexible plastic, and **in that** the tongue (38) is connected integrally to the connecting device (16).

8. Wiper blade according to one of Claims 1 to 7, **characterized in that** the connecting device (16) has two cheeks which are situated at a distance from each other, run transversely to the driving direction and are orientated parallel to each other and in planes perpendicular to the window and to which latching means of the connecting device (16) are connected.

9. Wiper blade according to Claim 8, **characterized in that** the connecting device (16), as seen transversely to the longitudinal extent of the wiper blade (10), has an essentially U-shaped cross section, the U-base (30) of which bears against the supporting element (12) and the two U-limbs (32, 34) of which form the cheeks.

10. Wiper blade according to either of Claims 8 and 9, **characterized in that** the cheeks (32, 34) each have strip-like extensions (40) which extend beyond the U-base (30) and whose distance (42) from each other, as measured in the working direction (double arrow 29) of the wiper blade (10), is co-ordinated with the width (44) of the supporting element (12), which width is present in the installation position and is measured in the working direction.

11. Wiper blade according to one of Claims 7 to 10, **characterized in that** at least one tongue (38) is formed on at least one of the two U-limbs (32, 34) of the connecting device (16), which tongue can be deflected out of the plane of the limb and extends into the region of the strip-like extensions (40) of the U-limbs, **in that** a latching hook is arranged on that free end of the tongue which is situated there, with the latching shoulder (48) facing the U-base, and **in that** the distance between the latching shoulder and the U-base is co-ordinated with the thickness of the supporting element.

12. Wiper blade according to one of Claims 1 to 7, **characterized in that** the connecting device (16) has a base plate (30) which can be placed on the upper side of the supporting element (12) and on which latching means (150, 152) of the connecting device (16) are arranged.

13. Wiper blade according to Claim 12, **characterized in that** the latching means (152) are arranged at the free end of a tongue (150), which is connected to the base plate (30) and is spring-loaded towards the supporting element (12), and are formed by a projection (152) which points towards the supporting element and has the retaining shoulder (154).

14. Wiper blade according to Claim 13, **characterized in that** the mating retaining shoulder facing the retaining shoulder (154) is formed by a cutout (156) on the supporting element (12).

15. Wiper blade according to one of Claims 12 to 14, **characterized in that** the connecting device (16) has, on the side of its base plate (30) facing the window, at least two guide strips (136) which extend in the direction of the longitudinal axis of the supporting element, are L-shaped in cross section and whose first L-limbs (138) which face away from the base plate (30) are directed towards each other in a claw-like manner, the distance between the other L-limbs (140) being co-ordinated with the width (144) of the supporting element (12) and the distance (146) between the first L-limbs (138) and the base plate (30) being co-ordinated with the thickness (148) of the supporting element (12).

## Revendications

1. Balai d'essuie-glace (10) pour vitres de véhicules automobiles, comprenant
- une raclette (14) de forme allongée, élastique à la façon du caoutchouc, qui peut être appliquée contre la vitre à essuyer, qui est tenue, dans une disposition à axes longitudinaux sensiblement parallèles, à un élément porteur (12) de forme allongée, élastique à la façon d'un ressort, constituant une première pièce, au segment central duquel est disposé, en tant qu'autre pièce, un dispositif d'attache (16) prévu pour des moyens d'attache conjugués (20) d'un bras d'essuie-glace entraîné (18), qui sont sollicités vers la vitre, le dispositif d'attache (16) possédant deux surfaces de butée (36) situées à distance l'une de l'autre, s'étendant transversalement à la direction d'entraînement, orientées parallèlement l'une à l'autre dans des plans à peu près perpendiculaires à la vitre, qui coopèrent avec des butées conjuguées du bras d'essuie-glace (18),
**caractérisé en ce qu'**
une des deux pièces (12, respectivement 16) assemblées l'une à l'autre est munie de moyens d'encliquetage pouvant s'écarter élastiquement, qui coopèrent avec des moyens d'encliquetage conjugués de l'autre pièce (16, respectivement 12) pour la fixation des deux pièces (12 et 16) l'une à l'autre.

2. Balai d'essuie-glace selon la revendication 1,
**caractérisé en ce que**
les moyens d'encliquetage sont disposés sur le dispositif d'attache (16).

3. Balai d'essuie-glace selon la revendication 2,
**caractérisé en ce que**
les moyens d'encliquetage présentent au moins un épaulement d'encliquetage (48) qui se trouve dans un plan au moins à peu près parallèle à la surface (26) de la vitre, et à cet épaulement d'encliquetage est associé un épaulement d'encliquetage conjugué de l'élément porteur (12).

4. Balai d'essuie-glace selon l'une des revendications 2 ou 3,
**caractérisé en ce que**
les moyens d'encliquetage présentent au moins un épaulement de retenue disposé transversalement à l'extension longitudinale de l'élément porteur, et à cet épaulement de retenue est associé un épaulement de retenue conjugué de l'élément porteur.

5. Balai d'essuie-glace selon l'une des revendications 3 ou 4,
**caractérisé en ce que**
les épaulements d'encliquetage, respectivement les épaulements de retenue, sont disposés à l'extrémité libre d'une languette disposée sur le dispositif d'attache (16) et qui est sollicitée élastiquement vers l'élément porteur (12).

6. Balai d'essuie-glace selon l'une des revendications 4 ou 5,
**caractérisé en ce que**
l'épaulement d'encliquetage conjugué, respectivement l'épaulement de retenue conjugué, associé à l'épaulement d'encliquetage, respectivement à l'épaulement de retenue, est formé par un évidement présent sur l'élément porteur.

7. Balai d'essuie-glace selon une des revendications 5 ou 6,
**caractérisé en ce que**
le dispositif d'attache (16) est fabriqué en une matière plastique élastique et la languette (38) est réunie au dispositif d'attache (16) en une seule pièce.

8. Balai d'essuie-glace selon l'une quelconque des revendications 1 à 7,
**caractérisé en ce que**
le dispositif d'attache (16) présente deux joues situées à distance l'une de l'autre, s'étendant transversalement à la direction d'entraînement, orientées parallèlement entre elles et dans des plans à peu près perpendiculaires à la vitre, auxquelles sont réunis des moyens d'encliquetage du dispositif d'attache (16).

9. Balai d'essuie-glace selon la revendication 8,
**caractérisé en ce que**
le dispositif d'attache (16) possède, vue transversalement à l'extension longitudinale du balai d'essuie-glace (10), une section sensiblement en forme de U dont la base (30) est appuyée contre l'élément porteur (12) et dont les deux branches (32, 34) forment les joues.

10. °)Balai d'essuie-glace selon l'une des revendications 8 ou 9,
**caractérisé en ce que**
les joues (32, 34) présentent des prolongements (40) en forme de réglettes qui s'étendent au-delà de la base (30) du U, dont la distance d'écartement (42), mesurée dans la direction du travail (double flèche 29) du balai d'essuie-glace (10), est adaptée à la largeur (44) de l'élément porteur (12) mesurée dans la direction de travail qui existe dans la position de montage.

11. Balai d'essuie-glace selon l'une quelconque des revendications 7 à 10,
**caractérisé en ce qu'**
à au moins une des deux branches de U (32, 34) du dispositif d'attache (16), est formée au moins une languette (38) pouvant s'écarter du plan de la branche, qui s'étend jusque dans la région des prolongements (40) en forme de réglettes des branches du U, à l'extrémité libre de la languette, qui se trouve à cet endroit, est disposé un crochet d'encliquetage possédant l'épaulement d'encliquetage (48) dirigé vers la base du U, et la distance entre les épaulements d'encliquetage et la base du U est adaptée à l'épaisseur de l'élément porteur.

12. Balai d'essuie-glace selon l'une quelconque des revendications 1 à 7,
**caractérisé en ce que**
le dispositif d'attache (16) possède une plaque de base (30) qui peut être appliquée contre la face supérieure de l'élément porteur (12), au niveau de laquelle sont disposées des moyens d'encliquetage (150, 152) du dispositif d'attache (16).

13. Balai d'essuie-glace selon la revendication 12,
**caractérisé en ce que**
les moyens d'encliquetage (152) sont disposés à l'extrémité libre d'une languette (150) reliée à la plaque de base (30) et sollicitée élastiquement vers l'élément porteur (12), et sont formés par une saillie (152) pointant vers l'élément porteur et qui présente les épaulements de retenue (154).

14. Balai d'essuie-glace selon la revendication 13,
**caractérisé en ce que**
l'épaulement de retenue conjugué dirigé vers l'épaulement de retenue (154) est formé par un évidement (156) de l'élément porteur (12).

15. Balai d'essuie-glace selon l'une quelconque des revendications 12 à 14,
**caractérisé en ce que**
le dispositif d'attache (16) présente, sur le côté de sa plaque de base (30) qui est dirigé vers la vitre, au moins deux réglettes de guidage (136) en forme de L en section transversale, qui s'étendent selon la direction de l'axe longitudinal de l'élément porteur, dont les premières branches en L (138) éloignées de la plaque de base (30) sont dirigées l'une vers l'autre, à la façon de griffes, la distance entre les autres branches de L (140) étant adaptée à la largeur (144) de l'élément porteur (12) et la distance (146) entre les premières branches en L (138) et la plaque de base (30) étant adaptée à l'épaisseur (148) de l'élément porteur (12).
